# EUROPEAN PATENT APPLICATION

(11) **EP 0 987 228 A2**
(43) Date of publication of application: **22.03.2000**
(21) Application number: 99115584.7
(22) Date of filing: 06.08.1999
(51) Int. Cl.: C03C 8/16, H01J 17/49

(54) **Glass paste composition, and transfer film and plasma display panel comprising the same**

(30) Priority: 07.08.1998 JP 22389498
(71) Applicant: JSR Corporation, Tokyo 104-0045 (JP)
(72) Inventor: Takahashi, Jiro, Yokkaichi, MIE 510-0957 (JP); Masuko, Hideaki, Yokkaichi, MIE 510-0827 (JP); Watanabe, Tsuyoshi, Yokkaichi, MIE 510-0957 (JP); Bessho, Nobuo, Yokkaichi, MIE 512-1214 (JP)
(74) Representative: Tiedtke, Harro, Dipl.-Ing.

(57) **Abstract**

A glass paste composition comprises (A) glass powder having a softening point of 500 to 550°C, (B) a bonder resin and (C) a solvent. The glass paste composition is useful for making a transfer film with a film-forming material layer made therefrom on a base film. The composition is also useful for making a plasma display panel having a dielectric layer made therefrom.

## Description

### Detailed Description of the Invention

The present invention relates to a glass paste composition, and a transfer film and a plasma display panel comprising the same. More specifically, it relates to a glass paste composition having a specific softening temperature, which can be suitably used to form a dielectric layer for a plasma display panel, to a transfer film comprising the same as a transfer layer and to a plasma display panel comprising the same as a dielectric layer.

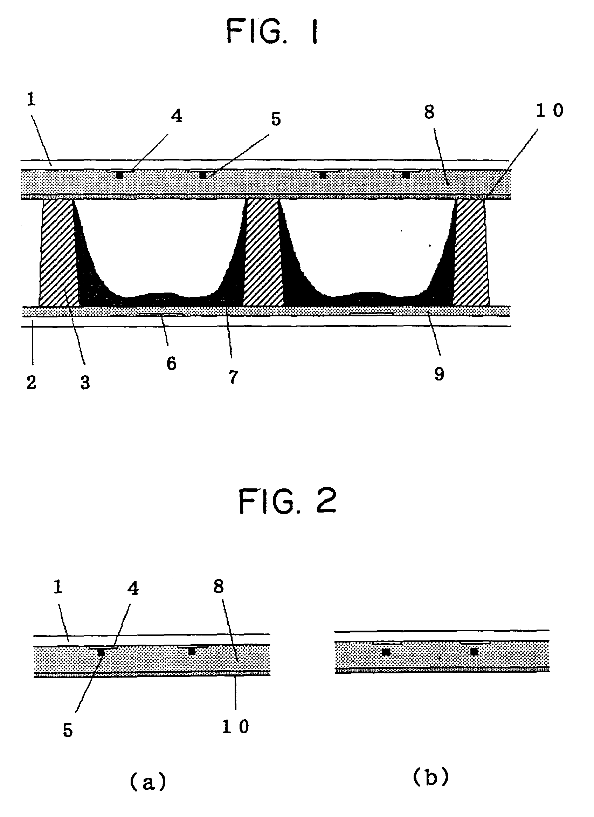

In recent years, much attention has been paid to a plasma display as a plate-like fluorescent display material. This will be described with reference to Fig. 1. Fig. 1 is a schematic diagram showing the section of an AC plasma display panel (to be abbreviated as "PDP" hereinafter). In Fig. 1, reference numerals 1 and 2 denote glass substrates which are opposed to each other, and 3 a barrier. Cells are formed by the glass substrate 1 (front substrate), the glass substrate 2 (rear substrate) and the barrier 3. Denoted by 4 is a transparent electrode fixed on the glass substrate 1, 5 a bus electrode formed on the transparent electrode to reduce the resistance of the transparent electrode, 6 an address electrode fixed on the glass substrate 2, 7 a fluorescent material held in each cell, 8 a dielectric layer formed on the surface of the glass substrate 1 to cover the transparent electrode 4 and the bus electrode 5, 9 a dielectric layer formed on the surface of the glass substrate 2 to cover the address electrode 6, and 10 a protective film made from magnesium oxide, for example.

The dielectric layer is formed of a glass sintered body and has a thickness of 20 to 50 µm, for example. There have been proposed methods of forming this dielectric layer, as exemplified by a method, which comprises first preparing a paste composition containing low-melting-point glass powder, a binder resin and a solvent (to be referred to as "glass paste composition" hereinafter) and coating the glass paste composition on the surface of the glass substrate 1 and dried in accordance with a screen-printing method to form a film-forming material layer, and a dry film method, which comprises coating the glass paste composition on a base film, drying the coating film to form a film-forming material layer, transferring the film-forming material layer formed on the base film to the surface of a glass substrate having electrodes fixed thereon and baking the transferred film-forming material layer to form a dielectric layer on the surface of the glass substrate (refer to JP-A 9-102273) (the term "JP-A" as used herein means an "unexamined published Japanese patent application").

A common method of forming the transparent electrode and the bus electrode comprises first forming a predetermined pattern transparent electrode film, which is essentially composed of ITO or SnO₂, on the glass substrate by a CVD or sputtering method and forming a bus electrode on the transparent electrode to attain a laminate structure. In recent years, studies have been made on the formation of the bus electrode by the screen-printing method or dry film method, which can help achieve higher productivity than that achieved by the conventional thin film-forming method, which can facilitate an expansion of the area of the bus electrode and which uses inexpensive thick film paste.

When a dielectric layer is formed on a thick bus electrode film using dielectric paste, which is essentially composed of low-melting-point glass powder having a softening point less than 500°C, by the above screen-printing or dry film method, the low-melting-point glass becomes a fluid at the time of baking the dielectric layer and enters a space between the bus electrode and the transparent electrode. That is, describing this with reference to Fig. 2, Fig. 2(a) shows that the bus electrode and the transparent electrode are bonded to each other and Fig. 2(b) shows that the bus electrode and the transparent electrode are separated from each other. The entry of the low-melting-point glass causes such a problem that the bus electrode is separated from the transparent electrode as shown in Fig. 2(b).

When the dielectric layer is formed on the thick bus electrode film essentially composed of silver by the dry film method, there occurs another problem that the bus electrode is colored at the time of baking.

When dielectric paste essentially composed of low-melting-point glass powder having a softening point higher than 550°C is used, on the other hand, a large number of air bubbles remain in the dielectric layer after baking and the dielectric layer becomes opaque, thereby reducing transmittance.

As a means of solving the above problems, a method is proposed that forms the first dielectric layer on the thick bus electrode film and the second dielectric layer, which is made from glass paste containing glass having a lower softening point, on the first dielectric layer (refer to JP-A 7-176269). However, the operation of this method is complicated and it is difficult to realize mass production and reduce costs.

The present invention has been made in view of the above situation.

It is the first object of the present invention to provide a glass paste composition capable of forming a dielectric layer which can prevent low-melting-point glass from becoming a fluid at the time of baking and entering a space between a bus electrode and a transparent electrode so as to prevent the bus electrode from separating from the transparent electrode.

It is the second object of the present invention to provide a glass paste composition capable of forming a dielectric layer which does not color a bus electrode at the time of baking when the dielectric layer is formed on a thick bus electrode film essentially composed of silver by a dry film method.

It is the third object of the present invention to provide a glass paste composition capable of forming a dielectric layer having excellent achromatic transparency.

It is the fourth object of the present invention to provide a transfer film having a transfer layer, that is, a film-forming material layer, which is made from the above glass paste composition of the present invention.

It is the fifth object of the present invention to provide a plasma display panel having a dielectric layer made from the above glass paste composition of the present invention.

Other objects and advantages of the present invention will become apparent from the following description.

According to the present invention, firstly, the above objects and advantages of the present invention are attained by a glass paste composition comprising (A) glass powder having a softening point of 500 to 550°C, (B) a binder resin and (C) a solvent.

Secondly, the above objects and advantages of the present invention are attained by a transfer film, which has a film-forming material layer made from the glass paste composition of the present invention formed on a base film.

Thirdly, the above objects and advantages of the present invention are attained by a plasma display panel having a dielectric layer made from the glass paste composition of the present invention.
Fig. 1 is a schematic diagram showing the section of an AC plasma display panel.
Figs. 2 are schematic diagrams showing the section of a plasma display panel, wherein Fig. 2(a) shows the normal state of a bus electrode (bonded to a transparent electrode) while Fig. 2(b) shows the state of the separated bus electrode (separated from the transparent electrode).

A description is first given of the glass paste composition of the present invention.

The glass paste composition of the present invention comprises glass powder, a binder resin and a solvent as essential ingredients.

### 〈glass powder〉

The glass powder constituting the composition of the present invention must has a softening point of 500 to 550°C. When the softening point of the glass powder is lower than 500°C, the low-melting-point glass becomes a fluid and enters a space between the bus electrode and the transparent conductive film in the step of baking a film-forming material layer, thereby separating the bus electrode from the transparent conductive film or coloring the bus electrode. On the other hand, when the softening point of the glass powder is higher than 550°C, air bubbles are hardly removed at the time of baking due to the high softening point and a large number of air bubbles remain in the dielectric layer with the result that the dielectric layer becomes opaque and transmittance thereof lowers.

The "softening point" as used herein is obtained from a chart drawn by measuring with a DTA (differential thermal analyzer). When the glass powder is heated at a fixed temperature elevation rate using a DTA in which the center of heat is existent in a lower portion of a sample pan, the first absorption shoulder and the second absorption flex point usually appear. The former shoulder is defined as a transition point while the latter flex point is defined as a softening point. It is assumed that the absorption of heat accompanied by the transition of glass causes the transition point to appear while a change in the shape of each of the glass powder (change causing the formation of a fluid from the most baked state) casues the softening point to appear.

As for the composition of the glass powder, the glass powder is preferably compositions of (1) lead oxide, boron oxide, silicon oxide and calcium oxide (PbO-B₂O₃-SiO₂-CaO), (2) zinc oxide, boron oxide and silicon oxide (ZnO-B₂O₃-SiO₂), (3) lead oxide, boron oxide, silicon oxide and aluminum oxide (PbO-B₂O₃-SiO₂-Al₂O₃), (4) lead oxide, zinc oxide, boron oxide and silicon oxide (PbO-ZnO-B₂O₃-SiO₂), (5) lead oxide, boron oxide and silicon oxide (PbO-B₂O₃-SiO₂), (6) bismuth oxide, boron oxide and silicon oxide (Bi₂O₃-B₂O₃-SiO₂), (7) bismuth oxide, boron oxide, silicon oxide and aluminum oxide (Bi₂O₃-B₂O₃-SiO₂-Al₂O₃), or the like. The glass powder is preferably a mixture comprising 50 to 80 wt% of lead oxide, 5 to 20 wt% of boron oxide, 10 to 50 wt% of silicon oxide and 0 to 10 wt% of calcium oxide. The particle diameter of the glass powder used in the present invention is preferably 0.1 to 5 µm.

The proportion of the glass powder in the composition of the present invention is preferably 50 wt% or more, more preferably 70 to 90 wt%, based on the total weight of the glass powder, the binder resin and the solvent.

### 〈binder resin〉

The glass paste composition of the present invention preferably comprises an acrylic resin as the binder resin. When an acrylic resin is contained as the binder resin, the formed film-forming material layer has excellent adhesion to a glass substrate. Therefore, when a transfer film is produced by coating the composition of the present invention on a base film, the obtained transfer film has excellent transferability of the film-forming material layer to the glass substrate.

The acrylic resin can bind the glass powder with appropriate tackiness and is selected from (co)polymers which are completely oxidized by the baking temperature (generally 500 to 600°C) of the film-forming material and removed.

To be specific, the (co)polymers include a homopolymer of a (meth)acrylate compound represented by the following formula (1), a copolymer of two or more (meth)acrylate compounds represented by the following formula (1) and a copolymer of a (meth)acrylate compound represented by the following formula (1) and other copolymerizable monomer.

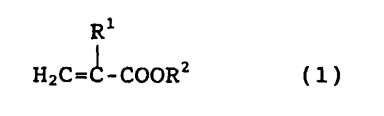

In the above formula, R¹ is a hydrogen atom or methyl group, and R² is a monovalent organic group.

Illustrative examples of the (meth)acrylate compound represented by the above formula (1) include alkyl (meth)acrylates such as methyl (meth)acrylate, ethyl (meth)acrylate, propyl (meth)acrylate, isopropyl (meth)acrylate, butyl (meth)acrylate, isobutyl (meth)acrylate, t-butyl (meth)acrylate, pentyl (meth)acrylate, amyl (meth)acrylate, isoamyl (meth)acrylate, hexyl (meth)acrylate, heptyl (meth)acrylate, octyl (meth)acrylate, isooctyl (meth)acrylate, ethylhexyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, stearyl (meth)acrylate and isostearyl (meth)acrylate; hydroxyalkyl (meth)acrylates such as hydroxyethyl (meth)acrylate, 2-hydroxypropyl (meth)acrylate, 4-hydroxybutyl (meth)acrylate, 3-hydroxypropyl (meth)acrylate, 2-hydroxybutyl (meth)acrylate and 3-hydroxybutyl (meth)acrylate; phenoxyalkyl (meth)acrylates such as phenoxyethyl (meth)acrylate and 2-hydroxy-3-phenoxypropyl (meth)acrylate; alkoxyalkyl (meth)acrylates such as 2-methoxyethyl (meth)acrylate, 2-ethoxyethyl (meth)acrylate, 2-propoxyethyl (meth)acrylate, 2-butoxyethyl (meth)acrylate and 2-methoxybutyl (meth)acrylate; polyalkylene glycol (meth)acrylates such as polyethylene glycol mono(meth)acrylate, ethoxydiethylene glycol (meth)acrylate, methoxypolyethylene glycol (meth)acrylate, phenoxypolyethylene glycol (meth)acrylate, nonylphenoxypolyethylene glycol (meth)acrylate, polypropylene glycol mono(meth)acrylate, methoxypolypropylene glycol (meth)acrylate, ethoxypolypropylene glycol (meth)acrylate and nonylphenoxypolypropylene glycol (meth)acrylate; cycloalkyl (meth)acrylates such as cyclohexyl (meth)acrylate, 4-butylcyclohexyl (meth)acrylate, dicyclopentanyl (meth)acrylate, dicyclopentenyl (meth)acrylate, dicyclopentadienyl (meth)acrylate, bornyl (meth)acrylate, isobornyl (meth)acrylate and tricyclodecanyl (meth)acrylate; benzyl (meth)acrylate; tetrahydrofurfuryl (meth)acrylate; and the like.

Of these, (meth)acrylate compounds of the formula (1) in which R² is a group containing an alkyl group or oxyalkylene group are preferred. Particularly preferred (meth)acrylate compounds are methyl (meth)acrylate, butyl (meth)acrylate, ethylhexyl (meth)acrylate, lauryl (meth)acrylate, isodecyl (meth)acrylate and 2-ethoxyethyl (meth)acrylate.

The other copolymerizable monomer to be copolymerized with the (meth)acrylate compound is not particularly limited as long as it can be copolymerized with the above (meth)acrylate compound, as exemplified by unsaturated carboxylic acids such as (meth)acrylic acid, vinylbenzoic acid, maleic acid and vinylphthalic acid; and radical polymerizable compounds containing a vinyl group such as vinylbenzyl methyl ether, vinyl glycidyl ether, styrene, α-methylstyrene, butadiene and isoprene. In the acrylic resin constituting the composition of the present invention, the copolymer component derived from the (meth)acrylate compound represented by the above formula (1) is preferably contained in an amount of 70 wt% or more, more preferably 90 wt% or more, particularly preferably 100 wt%.

The weight average molecular weight (to be abbreviated as "Mw" hereinafter) in terms of polystyrene measured by GPC of the binder resin constituting the composition of the present invention is preferably 2,000 to 300,000, more preferably 5,000 to 200,000.

The proportion of the binder resin in the composition of the present invention is preferably 5 to 40 parts by weight, more preferably 10 to 30 parts by weight, based on 100 parts by weight of the glass powder. When the proportion of the binder resin is too small, it is difficult to bind and hold the glass powder firmly. On the other hand, when the proportion is too large, the baking step takes too long, or the formed dielectric layer hardly obtains sufficient strength or thickness.

### 〈silane coupling agent〉

The composition of the present invention may contain a silane coupling agent. The silane coupling agent is preferably an alkyl group-containing (alkyl)alkoxysilane represented by the following formula (2). 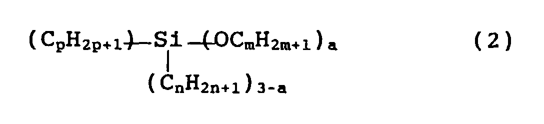 (wherein p is an integer of 3 to 20, m is an integer of 1 to 3, n is an integer of 1 to 3, and a is an integer of 1 to 3.)

In the above formula (2), p, which indicates the number of carbon atoms of a saturated alkyl group, is an integer of 3 to 20, preferably 4 to 16.

A film-forming material layer formed from the obtained glass paste composition may not have sufficient flexibility even if an (alkyl)alkoxysilane containing a saturated alkyl group of the formula (2) in which p is less than 3 is contained. Since an (alkyl)alkoxysilane containing a saturated alkyl group of the formula (2) in which p is more than 20 has a high decomposition temperature and since the glass powder is molten before the above silane compound is not completely decomposed and removed in the step of baking the film-forming material layer of the obtained glass paste composition, part of the silane compound may remain in the formed dielectric layer and the light transmittance of the dielectric layer may be thereby reduced.

Illustrative examples of the silane coupling agent represented by the above formula (2) include saturated alkyldimethyl methoxysilanes (a = 1, m = 1, n = 1) such as n-propyldimethyl methoxysilane, n-butyldimethyl methoxysilane, n-decyldimethyl methoxysilane, n-hexadecyldimethyl methoxysilane and n-eicosanedimethyl methoxysilane; saturated alkyldiethyl methoxysilanes (a = 1, m = 1, n = 2) such as n-propyldiethyl methoxysilane, n-butyldiethylmethoxysilane, n-decyldiethylmethoxysilane, n-hexadecyldiethyl methoxysilane and n-eicosanediethyl methoxysilane; saturated alkyldipropyl methoxysilanes (a = 1, m = 1, n = 3) such as n-butyldipropyl methoxysilane, n-decyldipropyl methoxysilane, n-hexadecyldipropyl methoxysilane and n-eicosanedipropyl methoxysilane; saturated alkyldimethyl ethoxysilanes (a = 1, m = 2, n = 1) such as n-propyldimethyl ethoxysilane, n-butyldimethyl ethoxysilane, n-decyldimethyl ethoxysilane, n-hexadecyldimethyl ethoxysilane and n-eicosanedimethyl ethoxysilane; saturated alkyldiethyl ethoxysilanes (a = 1, m = 2, n = 2) such as n-propyldiethyl ethoxysilane, n-butyldiethyl ethoxysilane, n-decyldiethyl ethoxysilane, n-hexadecyldiethyl ethoxysilane and n-eicosanediethyl ethoxysilane; saturated alkyldipropyl ethoxysilanes (a = 1, m = 2, n = 3) such as n-butyldipropyl ethoxysilane, n-decyldipropyl ethoxysilane, n-hexadecyldipropyl ethoxysilane and n-eicosanedipropyl ethoxysilane; saturated alkyldimethyl propoxysilanes (a = 1, m = 3, n = 1) such as n-propyldimethyl propoxysilane, n-butyldimethyl propoxysilane, n-decyldimethyl propoxysilane, n-hexadecyldimethyl propoxysilane and n-eicosanedimethyl propoxysilane; saturated alkyldiethyl propoxysilanes (a = 1, m = 3, n = 2) such as n-propyldiethyl propoxysilane, n-butyldiethyl propoxysilane, n-decyldiethyl propoxysilane, n-hexadecyldiethyl propoxysilane and n-eicosanediethyl propoxysilane; saturated alkyldipropyl propoxysilanes (a = 1, m = 3, n = 3) such as n-butyldipropyl propoxysilane, n-decyldipropyl propoxysilane, n-hexadecyldipropyl propoxysilane and n-eicosanedipropyl propoxysilane; saturated alkylmethyl dimethoxysilanes (a = 2, m = 1, n = 1) such as n-propylmethyl dimethoxysilane, n-butylmethyl dimethoxysilane, n-decylmethyl dimethoxysilane, n-hexadecylmethyl dimethoxysilane and n-eicosanemethyl dimethoxysilane; saturated alkylethyl dimethoxysilanes (a = 2, m = 1, n = 2) such as n-propylethyl dimethoxysilane, n-butylethyl dimethoxysilane, n-decylethyl dimethoxysilane, n-hexadecylethyl dimethoxysilane and n-eicosaneethyl dimethoxysilane; saturated alkylpropyl dimethoxysilanes (a = 2, m = 1, n = 3) such as n-butylpropyl dimethoxysilane, n-decylpropyl dimethoxysilane, n-hexadecylpropyl dimethoxysilane and n-eicosanepropyl dimethoxysilane; saturated alkylmethyl diethoxysilanes (a = 2, m = 2, n = 1) such as n-propylmethyl diethoxysilane, n-butylmethyl diethoxysilane, n-decylmethyl diethoxysilane, n-hexadecylmethyl diethoxysilane and n-eicosanemethyl diethoxysilane; saturated alkylethyl diethoxysilanes (a = 2, m = 2, n = 2) such as n-propylethyl diethoxysilane, n-butylethyl diethoxysilane, n-decylethyl diethoxysilane, n-hexadecylethyl diethoxysilane and n-eicosaneethyl diethoxysilane; saturated alkylpropyl diethoxysilanes (a = 2, m = 2, n = 3) such as n-butylpropyl diethoxysilane, n-decylpropyl diethoxysilane, n-hexadecylpropyl diethoxysilane and n-eicosanepropyl diethoxysilane; saturated alkylmethyl dipropoxysilanes (a = 2, m = 3, n = 1) such as n-propylmethyl dipropoxysilane, n-butylmethyl dipropoxysilane n-decylmethyl dipropoxysilane, n-hexadecylmethyl dipropoxysilane and n-eicosanemethyl dipropoxysilane; saturated alkylethyl dipropoxysilanes (a = 2, m = 3, n = 2) such as n-propylethyl dipropoxysilane, n-butylethyl dipropoxysilane, n-decylethyl dipropoxysilane, n-hexadecylethyl dipropoxysilane and n-eicosaneethyl dipropoxysilane; saturated alkylpropyl dipropoxysilanes (a = 2, m = 3, n = 3) such as n-butylpropyl dipropoxysilane, n-decylpropyl dipropoxysilane, n-hexadecylpropyl dipropoxysilane and n-eicosanepropyl dipropoxysilane; saturated alkyl trimethoxysilanes (a=3, m=1) such as n-propyl trimethoxysilane, n-butyl trimethoxysilane, n-decyl trimethoxysilane, n-hexadecyl trimethoxysilane and n-eicosane trimethoxysilane; saturated alkyl triethoxysilanes (a=3, m=2) such as n-propyl triethoxysilane, n-butyl triethoxysilane, n-decyl triethoxysilane, n-hexadecyl triethoxysilane and n-eicosane triethoxysilane; and saturated alkyl tripropoxysilanes (a = 3, m = 3) such as n-propyl tripropoxysilane, n-butyl tripropoxysilane, n-decyl tripropoxysilane, n-hexadecyl tripropoxysilane and n-eicosane tripropoxysilane. They may be used alone or in combination of two or more.

Of these, n-butyl trimethoxysilane, n-decyl trimethoxysilane, n-hexadecyl trimethoxysilane, n-decyldimethyl methoxysilane, n-hexadecyldimethyl methoxysilane, n-butyl triethoxysilane, n-decyl triethoxysilane, n-hexadecyl triethoxysilane, n-decylethyl diethoxysilane, n-hexadecylethyl diethoxysilane, n-butyl tripropoxysilane, n-decyl tripropoxysilane and n-hexadecyl tripropoxysilane are particularly preferred.

The proportion of the silane coupling agent in the composition of the present invention is preferably 0.001 to 10 parts by weight, more preferably 0.001 to 5 parts by weight, based on 100 parts by weight of the glass powder. When the proportion of the silane coupling agent is too small, the effect of improving the dispersion stability of the glass powder and the effect of improving the flexibility of the formed film-forming material layer cannot be fully achieved. On the other hand, when the proportion is too large, the viscosity of the obtained glass paste composition increases with the passage of time when it is preserved, or a reaction may occur between the silane coupling agents, thereby reducing light transmittance after baking.

### 〈plasticizer〉

The composition of the present invention may contain a plasticizer to provide excellent flexibility and flammability to the formed film-forming material layer. The plasticizer is preferably a compound represented by the following formula (3) or (4) or polypropylene.

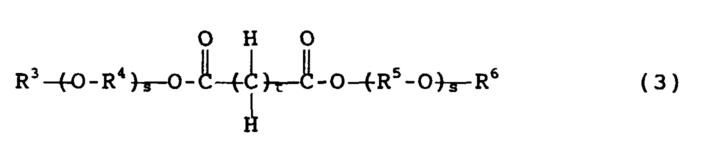

In the above formula (3), R³ and R⁶ are the same or different and each an alkyl or alkenyl group having 1 to 30 carbon atoms, R⁴ and R⁵ are the same or different and each a methylene group or an alkylene or alkenylene group having 2 to 30 carbon atoms, s is an integer of 0 to 5, and t is an integer of 1 to 10.

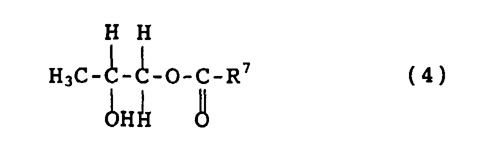

In the above formula (4), R⁷ is an alkyl or alkenyl group having 1 to 30 carbon atoms.

Even if a transfer film having a film-forming material layer containing a plasticizer is bent, fine cracks are not produced on the surface of the film-forming material layer, and the transfer film has excellent flexibility and can be rolled easily.

Since a plasticizer composed of the compound represented by the above formula (3) or (4), in particular, is easily decomposed by heat to be removed, it does not reduce the light transmittance of a dielectric layer obtained by baking the film-forming material layer.

In the above formula (3), the alkyl group or alkenyl group represented by R³ or R⁶ and the alkylene group or alkenylene group represented by R⁴ or R⁵ may be straight-chain or branched-chain.

The number of carbon atoms of the alkyl group or alkenyl group represented by R³ or R⁶ is 1 to 30, preferably 2 to 20, more preferably 4 to 10.

When the number of carbon atoms of the alkyl group is more than 30, the solubility of the plasticizer in the solvent constituting the glass paste composition of the present invention may decrease and excellent flexibility may not be obtained.

Illustrative examples of the compound represented by the above formula (3) include dibutyl adipate, diisobutyl adipate, di-2-ethylhexyl adipate, di-2-ethylhexyl azelate, dibutyl sebacate, dibutyl diglycol adipate and the like. Of these, compounds of the formula (3) in which n is an integer of 2 to 6 are preferred.

In the above formula (4), R⁷ is an alkyl group or alkenyl group having 1 to 30 carbon atoms. The alkyl group and alkenyl group represented by R⁷ may be straight-chain or branched-chain.

The number of carbon atoms of the alkyl group or alkenyl group represented by R⁷ is 1 to 30, preferably 2 to 20, more preferably 10 to 18.

Preferred examples of the compound represented by the above formula (4) include propylene glycol monolaurate, propylene glycol monooleate and the like.

When polypropylene glycol is used as a plasticizer, the weight average molecular weight (Mw) of polypropylene glycol is preferably in the range of 200 to 3,000, particularly preferably 300 to 2,000. When Mw of polypropylene glycol is less than 200, it may be difficult to form a film-forming material layer having high film strength on a base film, and a cohesion failure may occur in the film-forming material layer if an attempt is made to separate the base film from the film-forming material layer, which is thermally bonded to the glass substrate, in the transfer step using the transfer film having the film-forming material layer. On the other hand, when Mw is more than 3,000, a film-forming material layer having excellent thermal adhesion to the glass substrate may not be obtained.

The proportion of the plasticizer in the composition of the present invention is preferably 0.1 to 20 parts by weight, more preferably 0.5 to 10 parts by weight, based on 100 parts by weight of the glass powder. When the proportion of the plasticizer is too small, the flexibility of a film-forming material layer formed from the obtained composition may not be fully improved. On the other hand, when the proportion is too large, the tackiness of a film-forming material layer formed from the obtained composition may be too high, with the result that a transfer film having the film-forming material layer is inferior in handling properties.

### 〈solvent〉

The solvent constituting the composition of the present invention preferably has excellent affinity for the glass powder and excellent solubility in the binder resin, can provide proper viscosity to the glass paste composition and can be easily vaporized and removed by drying.

Illustrative examples of the solvent include ketones such as diethyl ketone, methylbutyl ketone, dipropyl ketone and cyclohexanone; alcohols such as n-pentanol, 4-methyl-2-pentanol, cyclohexanol and diacetone alcohol; ether-based alcohols such as ethylene glycol monomethyl ether, ethylene glycol monoethyl ether, ethylene glycol monobutyl ether, propylene glycol monomethyl ether and propylene glycol monoethyl ether; saturated aliphatic alkyl monocarboxylates such as n-butyl acetate and amyl acetate; lactates such as ethyl lactate and n-butyl lactate; ether-based esters such as methyl cellosolve acetate, ethyl cellosolve acetate, propylene glycol monomethyl ether acetate and ethyl-3-ethoxypropionate; turpentine oil, ethyl cellosolve, methyl cellosolve, terpineol, butyl carbitol acetate, butyl carbitol, isopropyl alcohol and benzyl alcohol. Of these, methylbutyl ketone, cyclohexanone, diacetone alcohol, ethylene glycol monobutyl ether, propylene glycol monomethyl ether, ethyl lactate and ethyl-3-ethoxypropionate are preferred. These solvents may be used alone or in combination of two or more.

The proportion of the solvent in the composition of the present invention is preferably 5 to 50 parts by weight, more preferably 10 to 40 parts by weight, based on 100 parts by weight of the glass powder from the viewpoint of maintaining the viscosity of the composition within a preferable range.

The glass paste composition of the present invention may contain such additives as a dispersant, tackiness-providing agent, surface tension control agent, stabilizer, antifoaming agent and the like as optional components.

A preferred example of the glass paste composition comprises 100 parts by weight of glass powder, which consist of 50 to 80 wt% of lead oxide, 5 to 20 wt% of boron oxide, 10 to 50 wt% of silicon oxide and 0 to 10 wt% of calcium oxide; 10 to 30 parts by weight of a copolymer of butyl methacrylate, hydroxypropyl methacrylate and 2-ethylhexyl methacrylate or polybutyl methacrylate (acrylic resin); and 10 to 50 parts by weight of propylene glycol monomethyl ether (solvent) as essential ingredients. More preferably, the above glass paste composition contains 0.1 to 5 parts by weight of a silane coupling agent represented by the above formula (2) and 0.5 to 10 parts by weight of a compound represented by the above formula (3) or (4) or polypropylene glycol as a plasticizer.

The composition of the present invention can be prepared by kneading the above glass powder, binder resin and solvent and optional components with a kneader or dispersion mixer such as a roll kneader, mixer, homomixer or sandmill.

The composition of the present invention prepared as described above is a paste composition having fluidity suitable for coating.

The composition of the present invention can be particularly advantageously used to produce a transfer film by forming a film-forming material layer on a base film, as will be described hereinafter. However, the composition of the present invention is not limited to this application purpose but may also be advantageously used in a conventionally known method of forming a film-forming material layer, that is, a method of forming a film-forming material layer by directly coating the composition on the surface of a glass substrate by a screen-printing method and drying the coating film. The viscosity of the glass paste composition of the present invention, which is coated on a glass substrate by the screen-printing method in the above step, is preferably 10,000 to 200,000 cp at 25°C.

### 〈transfer film〉

The glass paste composition of the present invention can be advantageously used to produce the transfer film of the present invention. This transfer film comprises a base film and a film-forming material layer formed on the base film. The glass paste composition of the present invention is a composite material suitable for use in the step of forming a dielectric layer by the dry film method. The glass paste composition of the present invention, which is coated on a base film by the dry film method, preferably has a viscosity at 25°C of 1,000 to 30,000 cp.

The base film constituting the transfer film of the present invention is preferably a resin film having heat resistance, solvent resistance and flexibility. When the base film has flexibility, the composition of the present invention can be coated by a roll coater or blade coater, and the film-forming material layer can be stored in a rolled state and supplied. A resin forming the base film is, for example, polyethylene terephthalate, polyester, polyethylene, polypropylene, polystyrene, polyimide, polyvinyl alcohol, polyvinyl chloride, fluororesin such as polyfluoroethylene, nylon or cellulose. The base film has a thickness of 20 to 100 µm, for example.

The surface of the base film coated with the composition of the present invention is preferably subjected to a release treatment. This facilitates the operation of separating the base film in the step of transferring the film-forming material layer to the glass substrate.

The film-forming material layer constituting the transfer film can be formed by coating the composition of the present invention on the above base film, drying the coating film and removing part or all of the solvent.

Preferred as a means of coating the composition of the present invention on the base film is one that can form a coating film having excellent thickness uniformity and large thickness (for example, 20 µm or more) efficiently, as preferably exemplified by a roll coater, blade coater, curtain coater, wire coater and the like.

The transfer film may have a protective film layer on the surface of the film-forming material layer. The protective film layer is a polyethylene terephthalate film, polyethylene film or polyvinyl alcohol film.

### 〈plasma display panel〉

The plasma display panel of the present invention is characterized by comprising a dielectric layer formed from the glass paste composition of the present invention. The dielectric layer is generally produced by forming a film-forming material layer formed from the glass paste composition of the present invention on a glass substrate having electrodes such as transparent electrodes and bus electrodes and baking the film-forming material layer to remove an organic substance. The formation of the film-forming material layer is preferably carried out by transferring the transfer film of the present invention to the substrate (placing the transfer film on the surface of the substrate and press-bonding it by a heating roller or the like).

The following examples are provided for the purpose of further illustrating the present invention but are in no way to be taken as limiting. The term "Parts" used in the following examples means "parts by weight".

The "softening point" of glass powder used in the following examples is a temperature at the second absorption flex point of a DTA chart obtained by the TAS 100 of Rigaku Co., Ltd.

### Example 1

### (1) preparation of glass paste composition:

The composition of the present invention having a viscosity of 7,000 cp was prepared by kneading together 100 parts of a PbO-B₂O₃-SiO₂-based glass powder (softening point of 530°C, manufactured by Asahi Glass Co., Ltd.) consisting of 65 wt% of lead oxide, 10 wt% of boron oxide and 25 wt% of silicon oxide, 20 parts of an acrylic resin obtained by copolymerizing butyl methacrylate and methyl methacrylate (butylmethacrylate/methyl methacrylate weight ratio of 70/30, Mw of 80,000) as a binder resin, and 20 parts of propylene glycol monomethyl ether as a solvent by means of a dispersion mixer.

### (2) production of transfer film:

The composition of the present invention prepared in (1) above was coated on a polyethylene terephthalate (PET) base film which had been subjected to a release treatment (width of 400 mm, length of 30 m, thickness of 38 µm) using a roll coater and the formed coating film was dried at 100°C for 5 minutes to remove the solvent, thereby producing a transfer film having a 40-µm-thickfilm-forming material layer formed on the base film.

### (2) transfer of film-forming material layer:

A SnO₂ transparent conductive film was formed on a glass substrate for a 20-inch panel, and silver paste was coated on the conductive film by screen printing and baked to form a bus electrode having a thickness of 10 µm and a width of 70 µm. The transfer film produced in (2) above was placed upon this substrate having this bus electrode, in such a manner that the film-forming material layer came in direct contact with the substrate, and press-bonded to the substrate by a heating roll. Bonding conditions included a heating roll surface temperature of 110°C, a roll pressure of 3 kg/cm² and a heating roll moving speed of 1 m/min.

After the end of press-bonding, the base film was separated and removed from the film-forming material later, whereby the film-forming material layer was transferred and bonded to the surface of the glass substrate.

### (4) baking of film-forming material layer and evaluation of dielectric layer:

The glass substrate having the film-forming material layer transferred thereon in (3) above was placed in a kiln and baked at 580°C for 30 minutes after the temperature inside the kiln was elevated from normal temperature to 580°C at a rate of 10°C/min to form a dielectric layer (thickness of 20 µm ± 1 µm) made of an achromatic transparent glass sintered body on the surface of the glass substrate.

When the form of this dielectric layer was observed with eyes, the dielectric layer was neither cracked nor separated from the substrate.

When the section of the dielectric layer was observed under an electron microscope (SEM S-4200 of Hitachi, Ltd.), the low-melting-point glass did not enter a space between the bus electrode and the transparent conductive film by softening and becoming a fluid, and the bus electrode was not separated from the transparent conductive film. When the appearance of the bus electrode was observed with eyes, the bus electrode was not colored.

Further, when a panel material made of a glass substrate having a dielectric layer was prepared for 5 plasma display panels to measure the light transmittance of the formed dielectric layer (measurement wavelength of 550 nm), the average value of light transmittance was 80 %. Thus, it was verified that the dielectric layer had excellent transparency. Results are shown in Table 1.

### Example 2

The composition of the present invention having a viscosity of 7,000 cp was prepared by kneading 100 parts of PbO-B₂O₃-SiO₂-based glass powder (softening point of 530°C, manufactured by Asahi Glass Co., Ltd.) consisting of 65 wt% of lead oxide, 10 wt% of boron oxide and 25 wt% of silicon oxide, 23 parts of an acrylic resin obtained by copolymerizing butyl methacrylate, hydroxypropyl methacrylate and 2-ethylhexylmethacrylate (butylmethacrylate/hydroxypropyl methacrylate/2-ethylhexyl methacrylate weight ratio of 30/10/60, Mw of 80,000) as a binder resin, 1 part of n-butyl trimethoxysilane as a silane coupling agent, 2.5 parts of a compound represented by the following formula (a) (propylene glycol monooleate) and 20 parts of propylene glycol monomethyl ether as a solvent by means of a dispersion mixer.

A transfer film was produced in the same manner as in Example 1 except that the obtained glass paste composition was used.

Thereafter, the film-forming material layer was transferred and baked in the same manner as in Example 1 to form a dielectric layer (thickness of 20 µm ± 1.0 µm) on the surface of a glass substrate for a 20-inch panel except that the obtained transfer film was used, and the dielectric layer was evaluated in the same manner as in Example 1. Results are shown in Table 1.

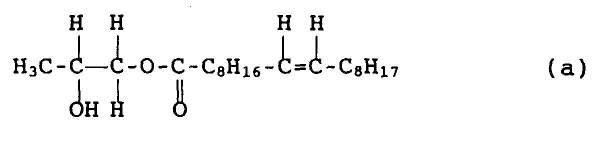

### Comparative Examples 1 and 2

Glass paste compositions for comparison were prepared in the sane manner as in Example 1 except that the glass powder was changed as shown in Table 1, and transfer films were produced in the same manner as in Example 1 except that the obtained glass paste compositions were used.

Thereafter, the film-forming material layers were transferred and baked in the same manner as in Example 1 except that the obtained transfer films were used to form dielectric layers (thickness of 20 µm ± 1.0 µm) on the surfaces of glass substrates for a 20-inch panel, and the dielectric layers were evaluated in the sane manner as in Example 1. Results are shown in Table 1.

**Table 1**

| | | Ex.1 | Ex.2 | C.Ex.1 | C.Ex.2 |
|---|---|---|---|---|---|
| glass powder | composition | PbO/B₂O₃/SiO₂ (65/10/25) | ← | PbO/B₂O₃/SiO₂/ZnO (70/15/8/7) | PbO/B₂O₃/SiO₂/CaO (60/5/30/5) |
| | | | ← | | |
| | softening point (°C) | 530 | 530 | 470 | 570 |
| adhesion of bus electrode | | excellent | excellent | separated | excellent |
| coloration of electrode | | No | No | Yes | No |
| transmittance (%) | | 80 | 80 | 85 | 70 |

The composition of the present invention provides the following effects.
(1) A dielectric layer can be formed that prevents low-melting-point glass from becoming a fluid and entering the space between the bus electrode and the transparent electrode, that prevents the bus electrode from peeling off or rising from the transparent electrode and that is free from the coloration of the bus electrode.
(2) A glass sintered body having excellent achromatic transparency (high light transmittance) can be formed and is suitable for use as a dielectric layer for PDP.
(3) A transfer film having excellent transferability of the film-forming material layer (thermal adhesion of the film-forming material layer to the glass substrate) can be produced.

A glass paste composition comprises (A) glass powder having a softening point of 500 to 550°C, (B) a bonder resin and (C) a solvent. The glass paste composition is useful for making a transfer film with a film-forming material layer made therefrom on a base film. The composition is also useful for making a plasma display panel having a dielectric layer made therefrom.

## Claims

1. A glass paste composition comprising (A) glass powder having a softening point of 500 to 550°C, (B) a binder resin and (C) a solvent.

2. The glass paste composition of claim 1, wherein the glass powder is selected from the group consisting of lead oxide, boron oxide, silicon oxide and calcium oxide (PbO-B₂O₃-SiO₂-CaO); zinc oxide, boron oxide and silicon oxide (ZnO-B₂O₃-SiO₂); lead oxide, boron oxide, silicon oxide and aluminum oxide (PbO-B₂O₃-SiO₂-Al₂O₃); lead oxide, zinc oxide, boron oxide and silicon oxide (PbO-ZnO-B₂O₃-SiO₂); lead oxide, boron oxide, silicon oxide (PbO-B₂O₃-SiO₂); bismuth oxide, boron oxide and silicon oxide (Bi₂O₃-B₂O₃-SiO₂); and bismuth oxide, boron oxide, silicon oxide and aluminum oxide (Bi₂O₃-B₂O₃-SiO₂-Al₂O₃).

3. The glass paste composition of claim 1, wherein the glass powder has a composition of lead oxide, boron oxide, silicon oxide and calcium oxide.

4. The glass paste composition of claim 3, wherein the glass powder comprises 50 to 80 wt% of lead oxide, 5 to 20 wt% of boron oxide, 10 to 50 wt% of silicon oxide and 0 to 10 wt% of calcium oxide.

5. The glass paste composition of claim 1, wherein the glass powder has an average particle diameter of 0.1 to 5 µm.

6. The glass paste composition of claim 1, wherein the glass powder is contained in an amount of 50 wt% or more based on the total weight of the glass powder (A), the binder resin (B) and the solvent (C).

7. The glass paste composition of claim 1, wherein the binder resin (B) is an acrylic resin containing a unit derived from a compound represented by the following formula (1): 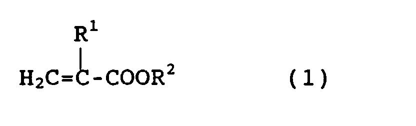 wherein R¹ is a hydrogen atom or methyl group, and R² is a monovalent organic group.

8. The glass paste composition of claim 1, wherein the binder resin (B) is selected from the group consisting of (1) a homopolymer of a (meth)acrylate compound represented by the above formula (1), a copolymer of two or more (meth)acrylate compounds represented by the above formula (1) and a copolymer of a (meth)acrylate compound represented by the above formula (1) and other copolymerizable monomer.

9. The glass paste composition of claim 1, wherein the solvent (C) is at least one member selected from the group consisting of methyl butyl ketone, cyclohexanone, diacetone alcohol, ethyleneglycol monobutyl ether, propyleneglycol monomethyl ether, ethyl lactate and ethyl-3-ethoxypropionate.

10. The glass paste composition of claim 1, wherein the solvent (C) is contained in an amount of 5 to 50 parts by weight based on 100 parts by weight of the glass powder.

11. The glass paste composition of claim 1, which further comprises (D) a silane coupling agent represented by the following formula (2): 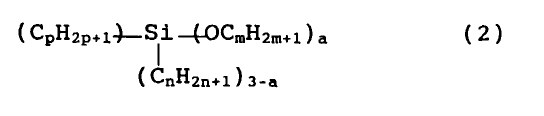 wherein p is an integer of 3 to 20, m is an integer of 1 to 3, n is an integer of 1 to 3, and a is an integer of 1 to 3.

12. The glass paste composition of claim 1, which further comprises as a plasticizer at least one compound (E) selected from the group consisting of a compound represented by the following formula (3): 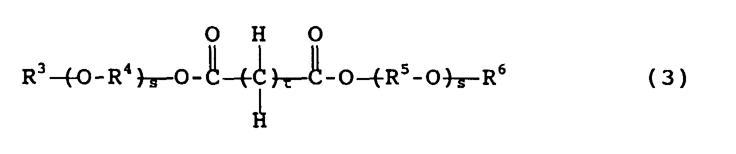 wherein R³ and R⁶ are the same or different and each an alkyl or alkenyl group having 1 to 30 carbon atoms, R⁴ and R⁵ are the same or different and each a methylene group or an alkylene or alkenylene group having 2 to 30 carbon atoms, s is an integer of 0 to 5, and t is an integer of 1 to 10;
a compound represented by the following formula (4): 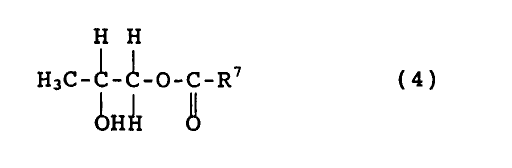 wherein R⁷ is an alkyl or alkenyl group having 1 to 30 carbon atoms;
and polypropylene glycol.

13. A transfer film comprising a base film and a film-forming material layer, which is made from the glass paste composition of claim 1 and which is formed on the base film.

14. A plasma display panel having a dielectric layer formed from the glass paste composition of claim 1.
